# FASCICULE DE BREVET EUROPEEN

(11) **EP 3 887 185 B1**
(45) Date de publication et mention de la délivrance du brevet: **14.06.2023**
(21) Numéro de dépôt: 19829266.6
(22) Date de dépôt: 04.11.2019
(51) Int. Cl.: B60J 10/25, B60J 10/70, B60R 13/04, B60J 10/50, B60J 10/235, B60J 10/265

(54) **VÉHICULE AUTOMOBILE COMPRENANT UN SYSTÈME D'ÉTANCHÉITÉ ENTRE UN ENJOLIVEUR DE VITRE ET LE JOINT DE FINITION ASSOCIÉ**
KRAFTFAHRZEUG MIT EINEM DICHTUNGSSYSTEM ZWISCHEN EINER FENSTERVERKLEIDUNG UND DER ZUGEORDNETEN ABSCHLUSSDICHTUNG
MOTOR VEHICLE COMPRISING A SEALING SYSTEM BETWEEN A WINDOW TRIM AND THE ASSOCIATED FINISH SEAL

(30) Priorité: 26.11.2018 FR 1871867
(43) Date de publication de la demande: 06.10.2021
(73) Titulaire: PSA Automobiles SA, 78300 Poissy (FR)
(72) Inventeur: RIVIERRE, Laurent, 75015 Paris (FR); TING, Andre, 92800 Puteaux (FR)
(86) Numéro de dépôt international: PCT/FR2019/052598
(87) Numéro de publication internationale: WO 2020/109683

(56) Documents cités:
- FR-A1- 2 932 742
- JP-A- 2007 038 984
- US-A1- 2003 218 351

## Description

La présente invention revendique la priorité de la demande française 1871867 déposée le 26 Novembre 2018 dont le contenu (texte, dessins et revendications) est ici incorporé par référence

La présente invention a trait à un véhicule automobile et à un joint de finition agencé entre un enjoliveur de vitre et une vitre telle qu'un pare-brise.

Le document CN 206781664 présente un enjoliveur de pare-brise monté sur le montant A d'un véhicule automobile, également appelé montant de baie. Un joint avec une lèvre d'étanchéité est agencé sous ledit enjoliveur ce qui permet de réduire la prise au vent ainsi que le bruit dû au vent et d'empêcher l'eau de pluie de se retrouver sur la vitre latérale du véhicule. Un véhicule similaire est divulgué dans le document JP 2007 038984 A.

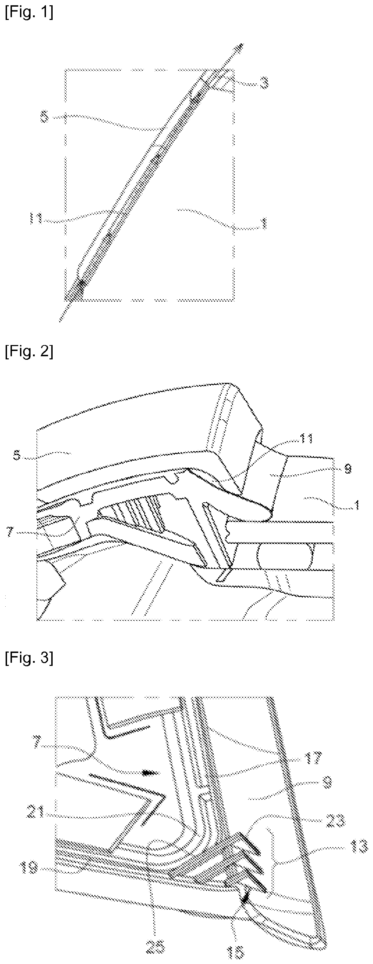

De manière générale, comme illustré aux figures 1 et 2, un joint 7 de finition avec une lèvre 9 est agencé entre l'enjoliveur 5 d'un montant 3 de baie de manière à ce que la lèvre 9 se place en appui sur le pare-brise 1 du véhicule. Il a été constaté que la surface extérieure de la lèvre 9 était disposée écartée de la face intérieure de l'enjoliveur de vitre si bien qu'un conduit 11 était formé sur toute la longueur de l'enjoliveur 5. Le conduit 11 ainsi formé est débouchant à ses extrémités, et de l'air peut s'y engouffrer lors du roulage du véhicule. Un sifflement est ainsi généré, causant des nuisances sonores pour les passagers du véhicule et diminuant ainsi la qualité perçue du véhicule. Il existe donc un besoin d'une solution pour remédier à un tel inconvénient.

L'invention a pour objectif d'apporter une solution à au moins un des problèmes et inconvénients rencontrés dans l'art antérieur. En particulier, l'invention a pour objectif de supprimer, ou du moins de réduire, les bruits pouvant être générés par le passage d'air sous un enjoliveur de vitre, tel qu'un enjoliveur latéral de pare-brise.

Ainsi, selon un premier aspect, l'invention a pour objet un véhicule automobile comprenant un pare-brise, au moins un montant de baie sur lequel est monté un enjoliveur de vitre, le véhicule comprenant en outre un joint de finition agencé pour être intercalé entre le montant de baie et l'enjoliveur, ledit joint de finition montrant une lèvre configurée pour s'appuyer sur le pare-brise, la lèvre et l'enjoliveur étant disposés au moins en partie écartés l'un de l'autre de sorte à former un conduit s'étendant selon la longueur dudit enjoliveur; le véhicule étant remarquable en ce qu'il comprend en outre au moins un système d'étanchéité disposé dans ledit conduit.

Comme on l'aura compris à la lecture de la définition qui vient d'en être donnée, l'invention propose d'intégrer un système d'étanchéité au niveau du conduit formé entre le joint de finition et l'enjoliveur de vitre de manière à l'obturer au moins partiellement et si possible totalement. L'obturation du conduit par le système d'étanchéité permet d'éviter que le l'air ne circule dans le conduit et évite donc la génération de bruit.

De manière avantageuse, le véhicule est remarquable en ce qu'au moins un système d'étanchéité comprend au moins une paroi agencée dans ledit conduit de sorte à l'obturer selon sa section transversale. L'invention va obturer le conduit par ajout de matière, néanmoins cet ajout de matière ne se fait pas sur toute la longueur du conduit mais prend la forme d'au moins une paroi d'une épaisseur prédéfinie,

Dans un mode de réalisation préféré, le véhicule est remarquable en ce qu'au moins un système d'étanchéité comprend au moins une nervure s'étendant depuis la lèvre du joint de finition en direction de l'enjoliveur de sorte à obturer ledit conduit selon sa section transversale. De préférence, la ou lesdites nervures sont venues de matière avec ladite lèvre. Cette configuration permet de d'obturer le conduit et donc d'améliorer le confort acoustique des passagers lors du roulage du véhicule en modifiant la lèvre du joint de finition avec l'ajout d'au moins une nervure formant une paroi destinée à obturer ledit conduit. La ou les nervures peuvent être réalisées par moulage sur la lèvre du joint de finition de sorte que l'ensemble ne forme qu'une seule pièce, ce qui est économique.

De manière préférentielle, le joint de finition se présente sous une forme de L avec un bras s'étendant le long du pare-brise et avec un retour disposé en appui sur l'aile avant, le bras et le retour définissant un coude ; le véhicule est remarquable en ce que au moins un système d'étanchéité est disposé sur la lèvre portée par le bras à hauteur dudit coude. La disposition du système d'étanchéité selon l'invention vis-à-vis de la partie basse des montants de baie empêche l'entrée de l'air dès l'embouchure du conduit formé par la lèvre du joint et l'enjoliveur.

Avantageusement, le système d'étanchéité disposé à hauteur du coude comprend au moins une nervure comprenant une première partie s'étendant depuis la lèvre du joint de finition en direction de l'enjoliveur de sorte à obturer ledit conduit selon sa section transversale et ladite nervure comprend une deuxième partie allant depuis la lèvre jusqu'au retour de manière à rigidifier ledit coude. Cette configuration est avantageuse pour deux raisons : d'une part l'embouchure du conduit est obturée et d'autre part le joint de finition est rendu plus rigide au niveau de coude formé lors de son retour vers l'aile avant du véhicule.

De préférence, la deuxième partie est plus épaisse que la première partie. Cette configuration permet donc de rendre le joint encore plus résistant.

Dans un autre mode de réalisation complémentaire ou alternatif du précédent, le véhicule est remarquable en ce qu'au moins un système d'étanchéité comprend au moins une nervure s'étendant depuis l'enjoliveur en direction de la lèvre du joint de finition de sorte à obturer ledit conduit selon sa section transversale ; de préférence, la ou lesdites nervures sont venues de matière avec ledit enjoliveur. Cette configuration est similaire à la configuration réalisée dans le mode de réalisation où la nervure s'étend depuis le joint, si ce n'est que cette fois, c'est l'enjoliveur qui est modifié avec l'ajout d'au moins une nervure. La nervure etl'enjoliveur peuvent former un seul élément réalisé par moulage avec une seule pièce de moulage, ce qui est économique. Le système d'étanchéité peut présenter à la fois des nervures s'étendant depuis le joint et d'autres s'étendant depuis l'enjoliveur.

Avec préférence, ledit au moins un système d'étanchéité comprend au moins deux nervures agencées successivement l'une à la suite de l'autre selon la direction longitudinale de l'enjoliveur. De manière avantageuse, au moins trois nervures peuvent être agencées successivement les unes à la suite des autres selon la direction longitudinale de l'enjoliveur. La présence d'une pluralité de nervures dans le système d'étanchéité permet d'accroître la fiabilité du système d'étanchéité. Les nervures peuvent être toutes reliées au joint de finition ou toutes reliées à l'enjoliveur ou encore se présenter sous forme d'un panachage entre des nervures reliées au joint de finition et des nervures reliées à l'enjoliveur.

De manière avantageuse, ledit au moins un système d'étanchéité s'étend en longueur sur moins de 10% de la longueur de l'enjoliveur, plus préférentiellement sur moins de 5% de la longueur de l'enjoliveur. La longueur du système d'étanchéité se comprend comme l'épaisseur des nervures à laquelle on additione la distance séparant les nervures successives. Cette faible longueur du système d'étanchéité par rapport à la longueur de l'enjoliveur permet de ne pas introduire une contrainte sur toute la longueur de l'enjoliveur qui aurait pour conséquence de le repousser par rapport au pare-brise et donc de le faire vriller. Un vrillage de l'enjoliveur aurait pour conséquence de dégrader les jeux et l'affleurement avec l'aile avant en partie basse et les jeux et affleurement sur le côté d'habitacle en partie haute.

Selon un second aspect, l'invention concerne un joint de finition pour enjoliveur de vitre, ledit joint étant destiné à être intercalé entre un montant de baie et un enjoliveur de vitre d'un véhicule automobile selon le premier aspect, ledit joint de finition présentant un corps avec une lèvre destinée à s'appuyer sur un pare-brise, et étant remarquable en ce qu'il comprend au moins une nervure s'étendant verticalement depuis sa lèvre de sorte à obturer la section transversale d'un conduit formé entrè ladite lèvre et l'enjoliveur de vitre lorsque le joint est monté sur le véhicule.

De préférence, ledit joint se présentant sous forme de L avec un bras destiné à s'étendre le long d'un pare-brise et avec un retour destiné à être disposé en appui sur une aile avant, le bras et le retour définissant un coude ; ledit joint de finition est remarquable en ce qu'il comprend au moins une nervure disposée sur ladite lèvre à hauteur dudit coude.

La mise en place d'une nervure sur le joint de finition à hauteur du coude permet de bloquer l'entrée de l'air directement au niveau de l'embouchure inférieure du conduit.

De manière préférentielle, la nervure est venue de matière avec la lèvre du joint de finition. Cela permet de fabriquer le joint de finition selon l'invention en un seul élément, avec un seul moule, ce qui est économique.

Avantageusement, ladite au moins une nervure est disposée à hauteur dudit coude et comprend une première partie destinée à s'étendre depuis la lèvre configurée pour s'appuyer sur le pare-brise en direction de l'enjoliveur, de sorte à obturer la section transversale dudit conduit et comprend une seconde partie allant depuis la lèvre jusqu'au retour de manière à rigidifier ledit coude. Le joint de finition, dans cette configuration, permet donc d'une part d'améliorer le confort acoustique des passagers du véhicule en bouchant l'entrée d'air du conduit et d'autre part d'être plus rigide, notamment en partie basse du montant de baie, au niveau du coude formé lors de son retour vers l'aile avant du véhicule.

Avec préférence, le joint de finition comprend au moins deux nervures agencées successivement les unes à la suite des autres. De manière avantageuse, au moins trois nervures peuvent être agencées successivement l'une à la suite de l'autre. L'inclusion d'une pluralité de nervures dans le joint de finition permet d'accroître la fiabilité de la prestation en matière d'étanchéité.

De manière avantageuse, ladite au moins une nervure, ou la succession de nervures agencées les unes à la suite des autres, s'étend en longueur sur moins de 10% de la longueur du joint de finition, plus préférentiellement sur moins de 5% de la longueur du joint de finition. Le fait que l'étalement des nervures sur le joint de finition est restreint favorise les interactions entre les extrémités supérieure et inférieure de l'enjoliveur avec respectivement le montant de baie du côté habitacle du véhicule et l'affleurement avec l'aile avant du véhicule.

Il est entendu que chaque caractéristique d'un mode de réalisation peut être combinée avec d'autres caractéristiques d'un autre mode de réalisation.

L'invention sera bien comprise et d'autres aspects et avantages apparaîtront clairement à la lecture de la description qui suit, donnée en référence à la planche de dessins annexée sur laquelle :
[Fig. 1] La figure 1 est une vue de la disposition d'un enjoliveur sur un montant de baie selon l'art antérieur.
[Fig. 2] La figure 2 montre une configuration selon l'art antérieur.
[Fig. 3] La figure 3 montre le système d'étanchéité selon l'invention.

Dans la description qui suit le terme « comprendre » est synonyme de « inclure » et n'est pas limitatif en ce qui concerne la présence d'autres éléments dans le véhicule ou le joint auquel il se rapporte. Il est entendu que le terme « comprendre » inclut les termes « consister en ». Les termes « inférieur », « supérieur », « avant », « arrière » s'entendront par rapport à l'orientation générale du véhicule. Les termes « inférieur » et « bas » indiqueront une proximité avec le sol plus importante selon la direction verticale que les termes « supérieur » ou « haut ». Le terme « avant » indiquera un positionnement orienté vers le devant d'un véhicule selon la direction horizontale et le terme « arrière » indiquera un positionnement orienté vers l'arrière d'un véhicule selon la même direction. Sur les différentes figures, les mêmes références désignent des éléments identiques ou similaires.

Le conduit 11, dont l'entrée est visible à la figure 2, est formé par la présence d'un écartement entre la lèvre 9 du joint 7 de finition et l'enjoliveur 5 sur la longueur de l'enjoliveur. Afin de réduire le bruit de l'air s'engouffrant dans ledit conduit, l'invention propose un système d'étanchéité 13, tel que visible à la figure 3, disposé dans le conduit 11. Le système d'étanchéité 13 comprend ainsi au moins une paroi qui sert à bloquer le passage de l'air dans le conduit 11.

Selon un mode de réalisation préféré, le système d'étanchéité comprend au moins une nervure 15 s'étendant depuis la lèvre 9 du joint 7 de finition en direction de l'enjoliveur 5. La ou les nervures font office de parois servant à bloquer la circulation de l'air dans le conduit 11. La figure 3 montre trois nervures 15 agencées successivement, les unes à la suite des autres.

La figure 3 montre que le joint 7 de finition à une forme de L, avec un bras 17 sur lequel est disposé la lèvre 9 et avec un retour 19. La lèvre est configurée pour s'appuyer sur le pare-brise et est utilisée pour améliorer l'esthétique du véhicule en proposant une interface homogène entre le joint 7 de finition et le pare-brise 1. La lèvre 19 peut aussi servir comme dispositif anti-bruit. Un coude 21 entre le bras 17 et le retour 19 est défini et se situe au niveau de la partie basse du pare-brise 1. Le retour 19 est ainsi en appui sur l'aile avant du véhicule. Avantageusement, le système d'étanchéité 13 comprend au moins une nervure 15 disposée sur la lèvre 9 portée par le bras 17 à hauteur du coude 21. Cela permet de placer le système d'étanchéité 13 à l'entrée du conduit 11. Néanmoins, l'homme du métier peut envisager un positionnement du système d'étanchéité au niveau de la partie haute du conduit ou au niveau de sa partie centrale. De même, l'invention est présentée en relation avec un seul système d'étanchéité, mais il est possible de la concevoir avec deux ou plus systèmes d'étanchéité répartis ou distribués selon la. longueur de la lèvre dudit joint et/ou de l'enjoliveur.

Au moins une nervure 15 peut comprendre une première partie 23 et une seconde partie 25. La première partie 23 est la partie qui s'étend depuis la lèvre 9 du joint 7 de finition en direction de l'enjoliveur, ce qui permet d'obturer le conduit 11 selon sa section transversale et d'améliorer ainsi le confort acoustique des passagers du véhicule. La seconde partie 25 de la nervure 15 s'étend selon depuis la lèvre 9 du joint 7 de finition jusqu'au retour 19 formé par la disposition en forme de L du joint 7 de finition et sert à rigidifier le coude 21. Avantageusement, la seconde partie 25 de la nervure 15 est plus épaisse que la première partie 23 de la nervure 15.

Selon un autre mode de réalisation, le système d'étanchéité 13 comprend au moins une nervure 15 s'étendant depuis l'enjoliveur 5 en direction de la lèvre 19 du joint 7 de finition. La ou les nervures font office de parois servant à bloquer l'entrée de l'air dans le conduit 11.

Préférentiellement, au moins une nervure 15 est venue de matière avec la lèvre 9 du joint 7 de finition ou avec l'enjoliveur 5 selon le mode de réalisation choisi. Le joint 7 de finition et l'enjoliveur 5 sont fabriqués en matériau thermoplastique élastomère, par exemple en élastomère thermoplastique de polyuréthane, en élastomère thermoplastique styrénique, en copolyester thermoplastique ou en copolyamide thermoplastique. Un exemple de matériau thermoplastique élastomère utilisé est l'EPDM (éthylène-propylène-diène monomère).

La présence de plusieurs nervures 15 dans le système d'étanchéité 13, par exemple deux nervures 15, ou trois nervures 15 comme montré à la figure 3, permet d'accroître la fiabilité du système d'étanchéité 13.

Le système d'étanchéité 13 selon l'invention s'étend au maximum sur 10% de la longueur de l'enjoliveur 5, préférentiellement jusqu'à 5% de la longueur de l'enjoliveur 5 et cela afin d'éviter l'effet de vrillage de l'enjoliveur 5. L'intérêt de rendre compact le système d'étanchéité 13 selon l'invention permet d'imbriquer aisément l'enjoliveur 5 sur le montant 3 de baie du véhicule. Les extrémités supérieure et inférieure de l'enjoliveur 5 peuvent donc facilement être mise en interaction, respectivement avec la partie supérieure du montant de baie, côté habitacle du véhicule, et en affleurement avec l'aile avant du véhicule, car le système d'étanchéité 13 de l'invention, en étant compact, ne modifie pas la forme de l'enjoliveur.

## Revendications

1. Véhicule automobile comprenant un pare-brise (1), au moins un montant (3) de baie sur lequel est monté un enjoliveur (5) de vitre, le véhicule comprenant en outre un joint (7) de finition agencé pour être intercalé entre le montant (3) de baie et l'enjoliveur (5), ledit joint (7) de finition montrant une lèvre (9) configurée pour s'appuyer sur le pare-brise (1), la lèvre (9) et l'enjoliveur (5) étant disposés au moins en partie écartés l'un de l'autre de sorte à former un conduit (11) s'étendant selon la longueur dudit enjoliveur (5), ledit véhicule comprenant en outre au moins un système d'étanchéité (13) disposé dans ledit conduit (11), **caractérisé en ce que** l'au moins un système d'étanchéité (13) comprend au moins une paroi agencée dans ledit conduit (11) de sorte à l'obturer selon sa section transversale.

2. Véhicule selon la revendication 1, **caractérisé en ce que** l'au moins un système d'étanchéité (13) comprend au moins une nervure (15) s'étendant depuis la lèvre (9) du joint (7) de finition en direction de l'enjoliveur (5) de sorte à obturer ledit conduit (11) selon sa section transversale ; de préférence, la ou lesdites nervures (15) sont venues de matière avec ladite lèvre (9).

3. Véhicule selon l'une des revendications 1 ou 2, **caractérisé en ce que** le joint (7) de finition se présentant sous une forme de L avec un bras (17) s'étendant le long du pare-brise (1) et un retour (19) disposé en appui sur l'aile avant, le bras (17) et le retour (19) définissant un coude (21) et **en ce que** l'au moins un système d'étanchéité (13) est disposé sur la lèvre (9) portée par le bras (17) à hauteur dudit coude (21).

4. Véhicule selon la revendication 3, **caractérisé en ce que** le système d'étanchéité (13) disposé à hauteur du coude (21) comprend au moins une nervure (15) comprenant une première partie (23) s'étendant depuis la lèvre (9) du joint (7) de finition en direction de l'enjoliveur (5) de sorte à obturer ledit conduit (11) selon sa section transversale et **en ce que** ladite nervure (15) comprend une deuxième partie (25) allant depuis la lèvre (9) jusqu'au retour (19) de manière à rigidifier ledit coude (11).

5. Véhicule selon l'une des revendications 2 à 4, **caractérisé en ce que** l'au moins un système d'étanchéité (13) comprend au moins deux nervures agencées successivement l'une à la suite de l'autre selon la direction longitudinale de l'enjoliveur (5).

6. Véhicule selon l'une des revendications 1 à 5, **caractérisé en ce que** ledit au moins un système d'étanchéité (13) s'étend en longueur sur moins de 10% de la longueur de l'enjoliveur (5).

7. Véhicule selon la revendication 1 à 8, **caractérisé en ce que** l'au moins un système d'étanchéité (13) comprend au moins une nervure (15) s'étendant depuis l'enjoliveur (5) en direction de la lèvre (9) du joint (7) de finition de sorte à obturer ledit conduit (11) selon sa section transversale ; de préférence, la ou lesdites nervures (15) sont venues de matière avec ledit enjoliveur (5).

8. Joint (7) de finition pour enjoliveur de vitre, ledit joint (7) étant destiné à être intercalé entre un montant (3) de baie et un enjoliveur (5) de vitre d'un véhicule automobile selon l'une des revendications 2 à 6, ledit joint (7) de finition présentant un corps avec une lèvre (9) destinée à s'appuyer sur un pare-brise (1), **caractérisé en ce qu'**il comprend au moins une nervure (15) s'étendant verticalement depuis sa lèvre (9) de sorte à obturer la section transversale d'un conduit (11) formé entre ladite lèvre (9) et l'enjoliveur (5) de vitre lorsque ledit joint est monté sur le véhicule.

9. Joint (7) de finition selon la revendication 8, **caractérisé en ce que** ledit joint se présente sous forme de L avec un bras (17) destiné à s'étendre le long d'un pare-brise (1) et avec un retour (19) destiné à être disposé en appui sur une aile avant, le bras (17) et le retour (19) définissant un coude (21) ; et **en ce qu'**il comprend au moins une nervure (15) disposée sur ladite lèvre (9) à hauteur dudit coude (21).

## Patentansprüche

1. Kraftfahrzeug mit einer Windschutzscheibe (1), mindestens einem Rahmenschenkel (3), an dem eine Fensterabdeckung (5) angebracht ist, wobei das Fahrzeug ferner eine Abschlussdichtung (7) aufweist, die so angeordnet ist, dass sie zwischen dem Rahmenschenkel (3) und der Abschlussabdeckung (5) angeordnet ist, wobei die Abschlussdichtung (7) eine Lippe (9) aufweist, die so konfiguriert ist, dass sie an der Windschutzscheibe (1) anliegt, wobei die Lippe (9) und die Abschlussabdeckung (5) mindestens teilweise voneinander beabstandet angeordnet sind, um einen Kanal (11) zu bilden Das Fahrzeug erstreckt sich entlang der Länge der Zierkappe (5), wobei das Fahrzeug ferner mindestens ein Dichtungssystem (13) umfasst, das in der Leitung (11) angeordnet ist, **dadurch gekennzeichnet, dass** das mindestens eine Dichtungssystem (13) mindestens eine Wand umfasst, die in der Leitung (11) derart angeordnet ist, dass sie sie in ihrem Querschnitt verschließt.

2. Fahrzeug nach Anspruch 1, dadurch gekennzeichet, dass das mindestens eine Abdichtungssystem (13) mindestens eine Rippe (15) umfasst, die sich von der Lippe (9) der Abschlussdichtung (7) in Richtung auf die Zierkappe (5) erstreckt, um die Leitung (11) in ihrem Querschnitt zu verschließen; vorzugsweise sind die Rippe oder die Rippen (15) mit der Lippe (9) einstückig ausgebildet.

3. Fahrzeug nach einem der Ansprüche 1 oder 2, **dadurch gekennzeichnet, dass** die Abschlussdichtung (7) in L-Form mit einem Arm (17), der sich entlang der Windschutzscheibe (1) erstreckt, und einem Rücksprung (19), der in Anlage an dem vorderen Schenkel angeordnet ist, vorliegt, wobei der Arm (17) und der Rücksprung (19) einen Knick (21) definieren, und dass das mindestens eine Dichtungssystem (13) an der Lippe (9) angeordnet ist, die von dem Arm (17) in Höhe des Knicks (21) getragen wird.

4. Fahrzeug nach Anspruch 3, **dadurch gekennzeichnet, dass** das Dichtungssystem (13), das in Höhe des Knicks (21) angeordnet ist, mindestens eine Rippe (15) umfasst, die einen ersten Abschnitt (23) umfasst, der sich von der Lippe (9) der Abschlussdichtung (7) in Richtung auf die Zierkappe (5) erstreckt, um den Kanal (11) gemäß seinem Querschnitt zu verschließen, und dass die Rippe (15) einen zweiten Abschnitt (25) umfasst, der sich von der Lippe (9) bis zum Rücksprung (19) erstreckt, um den Knick (11) zu versteifen).

5. Fahrzeug nach einem der Ansprüche 2 bis 4, **dadurch gekennzeichnet, dass** das mindestens eine Dichtungssystem (13) mindestens zwei in Längsrichtung der Zierleiste (5) hintereinander angeordnete Rippen umfasst.

6. Fahrzeug nach einem der Ansprüche 1 bis 5, **dadurch gekennzeichnet, dass** sich das mindestens eine Dichtungssystem (13) in der Länge über weniger als 10% der Länge der Zierkappe (5) erstreckt.

7. Fahrzeug nach einem der Ansprüche 1 bis 8, **dadurch gekennzeichnet, dass** das mindestens eine Dichtungssystem (13) mindestens eine Rippe (15) umfasst, die sich von der Zierkappe (5) in Richtung der Lippe (9) der Abschlussdichtung (7) erstreckt, um die Leitung (11) gemäß ihrem Querschnitt zu verschließen; vorzugsweise sind die Rippe oder die Rippen (15) einstückig mit der Zierkappe (5) ausgebildet.

8. Abschlussdichtung (7) für eine Fensterabdeckung, wobei die Abschlussdichtung (7) dazu bestimmt ist, zwischen einem Rahmenschenkel (3) und einer Fensterabdeckung (5) eines Kraftfahrzeugs eingefügt zu werden, nach einem der Ansprüche 2 bis 6, wobei die Abschlussdichtung (7) einen Körper mit einer Lippe (9) aufweist, die dazu bestimmt ist, sich auf eine Windschutzscheibe (1) zu stützen, **dadurch gekennzeichnet, dass** sie mindestens eine Rippe (15) aufweist, die sich vertikal von ihrer Lippe (9) aus erstreckt, um den Querschnitt eines Kanals (11) zu verschließen, der zwischen der Lippe (9) gebildet ist und die Radabdeckung (5) der Scheibe, wenn die Dichtung am Fahrzeug angebracht ist.

9. Abschlussdichtung (7) nach Anspruch 8, **dadurch gekennzeichnet, dass** die Dichtung L-förmig ist, mit einem Arm (17), der sich entlang einer Windschutzscheibe (1) erstrecken soll, und mit einem Rücksprung (19), der dazu bestimmt ist, in Anlage an einem vorderen Flügel angeordnet zu werden, wobei der Arm (17) und der Rücksprung (19) eine Krümmung (21) definieren, und dass sie mindestens eine Rippe (15) umfasst, die auf der Lippe (9) in Höhe der Krümmung (21) angeordnet ist. |

## Claims

1. A motor vehicle comprising a windshield (1), at least one window post (3) on which a window trim (5) is mounted, the vehicle further comprising a finishing seal (7) arranged to be interposed between the window post (3) and the trim (5), said finishing seal (7) showing a lip (9) configured to bear on the windshield (1), the lip (9) and the trim (5) being arranged at least partly spaced apart so as to form an extending conduit (11) depending on the length of said trim (5), said vehicle further comprising at least one sealing system (13) arranged in said duct (11), **characterized in that** the at least one sealing system (13) comprises at least one wall arranged in said duct (11) so as to close it in its cross section.

2. Vehicle according to Claim 1, **characterized in that** the at least one sealing system (13) comprises at least one rib (15) extending from the lip (9) of the finishing joint (7) in the direction of the trim (5) so as to close off the said duct (11) according to its cross section; preferably, the said rib or ribs (15) are integral with the said lip(9).

3. Vehicle according to either of Claims 1 and 2, **characterized in that** the finishing joint (7) is in the form of an L with an arm (17) extending along the windshield (1) and a return (19) arranged to bear on the front wing, the arm (17) and the return (19) defining an elbow (21) and **in that** the at least one sealing system (13) is arranged on the lip (9) borne by the arm (17) at the height of the said elbow (21).

4. Vehicle according to Claim 3, **characterized in that** the sealing system (13) arranged at the height of the elbow (21) comprises at least one rib (15) comprising a first part (23) extending from the lip (9) of the finishing joint (7) in the direction of the trim (5) so as to close off the said duct (11) according to its cross section and **in that** the said rib (15) comprises a second part (25) going from the lip (9) to the return (19) so as to stiffen the said elbow (11).

5. Vehicle according to one of Claims 2 to 4, **characterized in that** the at least one sealing system (13) comprises at least two ribs arranged successively one after the other in the longitudinal direction of the trim (5).

6. Vehicle according to one of Claims 1 to 5, **characterized in that** the said at least one sealing system (13) extends in length over less than 10% of the length of the trim (5).

7. Vehicle according to claims 1 to 8, **characterized in that** the at least one sealing system (13) comprises at least one rib (15) extending from the trim (5) in the direction of the lip (9) of the finishing joint (7) so as to close off said duct (11) according to its cross section; preferably, said rib or ribs (15) are integral with said trim (5).

8. Finishing joint (7) for a window trim, the said joint (7) being intended to be inserted between a window post (3) and a window trim (5) of a motor vehicle according to one of Claims 2 to 6, the said finishing joint (7) having a body with a lip (9) intended to bear on a windshield (1), **characterized in that** it comprises at least one rib (15) extending vertically from its lip (9) so as to close off the cross section of a duct (11) formed between the said lip (9) and the said window trim (5) when the said seal is mounted on the vehicle.

9. Finishing joint (7) according to Claim 8, **characterized in that** the said joint is in the form of an L with an arm (17) intended to extend along a windshield (1) and with a return (19) intended to be arranged to bear on a front wing, the arm (17) and the return (19) defining an elbow (21) and **in that** it comprises at least one rib (15) arranged on the said lip (9) at the height of the said elbow (21).
